Europäisches Patentamt

European Patent Office

Office européen des brevets

(19)

(11) Veröffentlichungsnummer : **0 191 196**
**B1**

(12) # EUROPÄISCHE PATENTSCHRIFT

(45) Veröffentlichungstag der Patentschrift :
**15.06.88**

(21) Anmeldenummer : **85201787.0**

(22) Anmeldetag : **05.11.85**

(51) Int. Cl.⁴ : **B 27 K 3/15**, B 27 K 3/08,
G 10 C 3/06, G 10 D 3/02

(54) **Verfahren zur Vergütung von Holz sowie Verwendung des vergüteten Holzes.**

(30) Priorität : **13.02.85 DE 3504898**

(43) Veröffentlichungstag der Anmeldung :
**20.08.86 Patentblatt 86/34**

(45) Bekanntmachung des Hinweises auf die Patenterteilung : **15.06.88 Patentblatt 88/24**

(84) Benannte Vertragsstaaten :
**AT CH DE FR GB IT LI**

(56) Entgegenhaltungen :
EP-A- 0 018 446
AT-B- 311 033
DE-B- 1 013 061
DE-C- 545 044
DE-C- 2 055 164
GB-A- 1 922

(73) Patentinhaber : **RÜTGERSWERKE AKTIENGESELL-SCHAFT**
**Mainzer Landstrasse 217**
**D-6000 Frankfurt am Main 1 (DE)**

(72) Erfinder : **Giebeler, Eberhard, Dr.**
**Langensiepenstrasse 30**
**D-4330 Mülheim (Ruhr) (DE)**
Erfinder : **Wilhelm, Gerhard, Dr.**
**Stahlbühlring 80**
**D-6802 Ladenburg (DE)**

**0 191 196**

**Beschreibung**

Die Erfindung betrifft ein Verfahren zur Vergütung von Holz hinsichtlich seiner Dimensionsstabilität und seiner Resonanzeigenschaften.

Diese Eigenschaften sind von besonderer Bedeutung, wenn Holz zur Herstellung von Klangkörpern, wie Musikinstrumenten, Gehäusen von hochwertigen elektroakustischen Anlagen oder Verkleidungsplatten von Konzertsälen verwendet wird. Für diese Verwendungszwecke wird einerseits nur lange gelagertes, besonders ausgesuchtes sog. Resonanzholz mit möglichst gleichmäßigem Aufbau der Jahresringe eingesetzt. Dieses Holz ist sehr rar und teuer. Andererseits versucht man, die Qualität normaler Hölzer durch Lackieren, Imprägnieren oder Behandeln zu verbessern. Lackieren von Holz hat nur einem mäßigen Einfluß auf die Dimensionsstabilität und verschlechtert zudem die Resonanzeigenschaften, weil die Poren und Kapillaren des Holzes verstopft und damit die Klangeigenschaften reduziert werden. DE-B-1 013 061 und GB-A-1 922 beschreiben Verfahren zum Imprägnieren von prösem Material wie z. B. Holz. Ziel dieser Imprägnierung ist die Verfestigung des Materials und es wird erreicht, indem die Hohlräume (Poren) mit einem polykondensierbaren Gemisch (Phenol + Aldehyd) gefüllt werden und danach durch Erhitzen die Kondensation durchgeführt wird.

Es resultiert ein kompaktes, verfestigtes Material, mit verbesserten Eigenschaften und erhöhter Säurebeständigkeit. Die Resonanzeigenschaften derartiger, imprägnierter Hölzer sind dabei verschmechtert, so daß diese Hölzer nicht zur Herstellung von hochwertigen Klangkörpern geeignet sind. Beim Behandeln von Holz, etwa gemäß DE-PS-878 553 oder insbesondere EP-B-0 018 446 wird zwar die notwendige Dimensionsstabilität auch dann erhalten, wenn nicht besonders ausgewähltes Holz ohne vorherige Alterung behandelt wird, die Klangeigenschaften aber werden in wesentlichen nur insoweit verbessert, als infolge geringerer Schrumpf- und Quelleffekte bei wechselnder Feuchtigkeitseinwirkung die Resonanzeigenschaften konstanter bleiben.

Es ist daher Aufgabe der vorliegenden Erfindung, ein Verfahren zur Vergütung von Holz bereitzustellen, bei dem bei normalem, nicht vorgealtertem Holz ein von wechselnden Witterungseinflüssen nicht beeinträchtigtes, verbessertes Resonanz- und Klangverhalten erzielt wird, das dem alter und ausgesuchter Resonanzhölzer entspricht.

Die Aufgabe wird gelöst durch ein Verfahren gemäß der Ansprüche 1 bis 4. Das gemäß dem Verfahren vergütete Holz wird erfindungsgemäß zur Herstellung von Klangkörpern verwendet.

Bei der Alterung von Holz laufen zwei Prozesse ab :

Gewisse Holzbestandteile, vorwiegend Hemicellulosen, werden abgebaut. Da diese Stoffe hauptsächlich für das Quellverhalten verantwortlich sind, verbessern sich dadurch klimabedingte Schwankungen.

Zudem tritt eine gewisse Verhärtung des Holzes auf. Bei Holz mit guten Resonanzeigenschaften verlaufen diese Prozesse in der Art, daß sich gleichmäßige Kapillaren mit verstärkten Wandungen ausbilden, die letztendlich für die gleichförmigen, nahezu ungedämpften Schwingungen und damit für die guten Klangeigenschaften ausschlaggebend sind.

Es wurde gefunden, daß sich dieser langjährige, natürliche Prozeß künstlich beschleunigen und gezielt steuern läßt, wenn man im Reaktor parallel verlaufend einen Abbau von Holzbestandteilen und einen Aufbau von Polymeren in den Kapillaren des Holzes bewirkt, wobei das sich bildende Polymer in so geringen Mengen entsteht, daß es lediglich die Wandungen der Kapillaren verstärkt, keinesfalls aber die Kapillaren verstopft ; d. h. es dürfen auf den Kapillarwandungen lediglich mono- oder oligomolekulare Schichten an Polymer entstehen, Schichten, die so dünn sind, daß sie helfen, Schwingungen zu übertragen, ohne daß eine zusätzliche unerwünschte Klangdämpfung entsteht.

Erzielt wird dies erfindungsgemäß dadurch, daß in die Kapillarräume des Holzes geringe Mengen reaktiver Bausteine eingebracht werden, die miteinander und mit Bestandteilen des Holzes zu duroplastischen Polymeren reagieren können und daß diese Bausteine in einer gleichzeitig oder kurz darauf erfolgenden thermischen Behandlung unter Druck zu den entsprechenden Polymeren reagieren, während bei der gleichen Behandlung andere, instabile Holzbestandteile abgebaut werden.

Ausgangsmaterial für das erfindungsgemäße Verfahren ist normales rißfreies Kernholz, dessen Wassergehalt nicht mehr als 10 Gew.-% beträgt. Der bevorzugte Wassergehalt liegt bei 2 bis 5 Gew.-%. Die Holzart ist nicht von Bedeutung, so daß aus billigem Pappel-, Fichten- oder Kiefernholz hochwertiges vergütetes Holz hergestellt werden kann. Auch an die Güte des Ausgangsholzes werden, abgesehen davon, daß es keine groben Fehlstellen wie etwa Astlöcher haben darf, keine besonderen Anforderungen gestellt.

Reaktive Bausteine duroplastischer Polymere sind monomere chemische Substanzen, die in der Wärme mit anderen reaktiven Bausteinen oder mit Holzinhaltsstoffen zu duroplastischen Polymeren reagieren können.

Beispiele für derartige Substanzen, die mit Holzinhaltsstoffen reagieren können, sind Aldehyde wie Form- oder Acetaldehyd, Ketone, Epichlorhydrin, Acrylsäure, Maleinsäure oder -anhydrid.

Andere reaktive Bausteine wie Harnstoff, Furfurylalkohol, Melamin oder Phenol bzw. Phenolderivate wie Kresole oder Xylenole benötigen als Coreaktanten einen Aldehyd oder ein Keton. In diesem Falle müssen beide miteinander umzusetzenden Bausteine in die Kapillaren des Holzes eingebracht werden. Als bevorzugte reaktive Bausteine werden Phenol und Formaldehyd eingesetzt.

2

Zum Einbringen der Reaktionspartner in das Holz gibt es verschiedene Möglichkeiten : Das Holz kann mit einer Lösung eines reaktiven Bausteins in Wasser oder einem organischen Lösemittel getränkt und anschließend getrocknet werden oder das Holz wird in einem engen abgeschlossenen Volumen, etwa in eine Folie eingewickelt, zusammen mit einem oder mehreren gasförmigen und/oder verdampfenden Reaktanten gelagert, so daß dieser oder diese durch Diffusion in die Kapillaren des Holzes eindringen. Beide Methoden sind sehr zeitraubend. Es ist daher bevorzugt, den oder die reaktiven Bausteine in einem Reaktor über die Dampfphase in das Holz einzubringen. Dies kann dadurch erfolgen, daß an den mit Holz beschichteten Reaktor ein Vakuum angelegt und danach entspannt wird, wobei das dazu in den Reaktor eingeleitete Gas entweder ein gasförmiger reaktiver Baustein ist oder ein einen reaktiven Baustein enthaltendes inertes Trägergas. In der einfachsten Ausführung werden die reaktiven Bausteine gleichzeitig mit dem Holz in den Reaktor eingegeben, verdampfen während der Aufheizphase des Reaktors und dringen, unterstützt durch den aufgebrachten Druck, in die Kapillaren des Holzes ein.

Werden zwei miteinander reagierende reaktive Bausteine duroplastischer Polymere in das Holz eingebracht, so können diese bei Temperaturen unterhalb ihrer Reaktionsschwelle, gemeinsam oder getrennt eingebracht werden. Bei den bevorzugt verwendeten reaktiven Bausteinen Phenol und Formaldehyd wird eine besonders intensive Vergütung dadurch erreicht, daß in einem ersten Behandlungsschritt Holz mit etwa 2 Gew.-% Phenol im Reaktor auf etwa 80 °C erwärmt und dann bis zu einem Druck von 25 bis 100 mbar evakuiert wird, nach etwa 15 min mit Stickstoff entspannt, erneut evakuiert und nach weiteren 10 bis 15 min mit einem mit bis zu 10 Vol.% mit Formaldehydgas beladenen Stickstoff entspannt wird. Danach wird der Reaktor auf eine Temperatur im Bereich von 170 bis 200 °C erhitzt und durch Einpressen von vorgewärmten Stickstoff ein Enddruck von 3 bis 15 bar eingestellt. Nach Erreichen der gewünschten Druck- und Temperaturwerte werden diese Reaktionsbedingungen noch 0,5 bis 8 h aufrechterhalten. Danach wird entspannt und das vergütete Holz ist nach dem Abkühlen direkt zur weiteren Bearbeitung zur Herstellung von Klangkörpern einsetzbar.

Während der Druck-Wärme-Behandlung werden hydrolysierende Bestandteile des Holzes, vorwiegend Hemicellulosen abgebaut. Als Reaktionsprodukte entstehen dabei u. a. auch Säuren, wie z. B. Ameisen- oder Essigsäure, die ihrerseits die Kondensationsreaktion des Phenols mit Formaldehyd katalysieren. Dadurch läuft diese Kondensationsreaktion bevorzugt an den Kapillarwandungen ab. Andere Reaktionsprodukte wie Furfurylalkohol oder phenolische Komponenten können ihrerseits wieder mit dem in die Kapillaren eingebrachten Formaldehyd reagieren und vernetzen. Dadurch, daß diese Stoffe unter den erfindungsgemäßen Bedingungen bereits vernetzen, solange sie sich noch in den Wandungen der Holzfasern und -Kapillaren befinden, tragen sie ebenfalls dazu bei, diese Kapillarwandungen zu verstärken und zu verhärten und damit die Schwingungseigenschaften zu verbessern. Es bildet sich somit ein vergütetes, verstärktes Holz, das von Witterungsschwankungen unabhängig, in seinen klanglichen Eigenschaften dem alter, guter Musikinstrumente entspricht. Diese akustischen Eigenschaften können noch verbessert werden, wenn während der Druck- und Temperaturbehandlung Schwingungen im Bereich von 16 bis 4 000 Hertz auf das Holz einwirken.

Die nachfolgenden Beispiele zeigen die Verbesserungen der Klangeigenschaften erfindungsgemäß vergüteter Hölzer, und damit die besondere Eignung der so vergüteten Hölzer zur Herstellung von Klangkörpern.

## Beispiel 1

3 mm starke Fichtensägefurniere in den Abmessungen 600 × 300 mm mit Maserungsverlauf parallel zur Längsrichtung und senkrecht zum Querschnitt (Radialschnitt) und ca. 2 mm Abstand von Jahresring zu Jahresring werden auf 5 % Feuchte vorgetrocknet und in einem Autoklaven innerhalb 15 min auf 170 °C erhitzt. Als Wärmeträger dient erhitzter Stickstoff, der auf 9 bar komprimiert ist. Gleichzeitig mit dem Holz werden in zwei getrennten Schalen 37 %ige Formaldehydlösung und Phenol in ausreichenden Mengen vorgelegt, um eine gesättigte Gasraumbeladung zu erzielen. Nach weiteren 45 min wird der Druck innerhalb von 15 min auf Atmosphärendruck reduziert, die Kreislauffahrweise des Inertgases unterbrochen und die Proben dem Autoklaven entnommen (Probe 1.1). Nach Lagerung (14 Tage bei 20 °C und 60 % Luftfeuchte) werden die Proben mit unbehandelten Vergleichsproben verglichen. Die Vergleichsproben stammen jeweils aus dem benachbarten Radialschnitt und sind damit in der Maserung und allen anderen maßgeblichen Eigenschaften mit dem zur Vergütung verwendeten Ausgangsmaterial übereinstimmend (Probe 1.2). Weiterhin werden die Proben mit solchen Proben verglichen, die der gleichen Temperatur- und Druckbehandlung unterworfen, aber nicht mit Phenol und Formaldehyd beladen worden waren (Probe 1.3).

Die akustische Untersuchung der Proben wird in einem Biegeschwingungsmeßgerät in Anlehnung an DIN 53440 durchgeführt. Die Proben werden einseitig aufgespannt und über ein aufgeklebtes Metallplättchen elektromagnetisch in Schwingungen versetzt. Die freischwingende Länge beträgt 180 mm.

Ergebnis

| Probe | Dichte $(kg/m^3)$ | Resonanz-frequenz $(Hz)$ | E-Modul $\cdot 10^{10}(N/m^2)$ | E/Dichte $\cdot 10^6 (m^2/s^2)$ | Verlust-faktor |
|---|---|---|---|---|---|
| 1.1 | 480 | 112 | 1,36 | 28,3 | 0,0082 |
|  |  | 697 | 1,38 | 28,7 | 0,0089 |
|  |  | 1955 | 1,37 | 28,5 | 0,012 |
| 1.2 | 465 | 109 | 1,26 | 27,1 | 0,0085 |
|  |  | 687 | 1,28 | 27,4 | 0,0086 |
|  |  | 1920 | 1,26 | 27,1 | 0,01 |
| 1.3 | 450 | 106 | 1,18 | 26,2 | 0,0092 |
|  |  | 657 | 1,15 | 25,5 | 0,011 |
|  |  | 1835 | 1,14 | 25,3 | 0,013 |

Die thermisch behandelte und mit reaktiven Bausteinen duroplastischer Polymere beladene Probe (1.1) erfährt eine Dichteerhöhung um etwa 2 %. Der Biegeelastizitätsmodul ist um 10-20 % gestiegen. Der Verlustfaktor wird im Vergleich zur unbehandelten Probe 1.2 leicht verbessert. Das für die Schwingungswellenausbreitungsgeschwindigkeit maßgebliche Verhältnis Elastizitätsmodul/Dichte ist bei Probe 1.1 am höchsten. Ebenfalls sind die Resonanzfrequenzen zu höheren Werten hin verschoben.

Beim Klopfen an die Proben (Klopfversuch) klingt Probe 1.1 gegenüber den Proben 1.2 und 1.3 heller und ungedämpfter. Dieser psychoakustische Effekt is auch dann wahrnehmbar, wenn entsprechend behandelte Hölzer zu Resonanzdecken an Böden von Streich- und Zupfinstrumenten verarbeitet werden. Entsprechend hersgestellte Instrumente entsprechen in ihrer Klangqualität hochwertigen, alten Instrumenten. Die Klangeigenschaften sind von Feuchtigkeits- und Witterungsänderungen nicht beeinflußt.

### Beispiel 2

Analog Beispiel 1.1 werden Holzproben thermisch in Gegenwart von Phenol und Formaldehyd behandelt, wobei jedoch die Behandlungsbedingungen wie folgt variiert werden :

Behandlungszeit 75 min
Behandlungstemperatur 190 °C
Druck 11 bar
Die so vergüteten Proben (2.1) werden mit unbehandelten Vergleichsproben (2.2) verglichen.

| Probe | Dichte $(kg/m^3)$ | Resonanz-frequenz $(Hz)$ | E-Modul $\cdot 10^{10}(N/m^2)$ | E/Dichte $\cdot 10^6 (m^2/s^2)$ | Verlust-faktor |
|---|---|---|---|---|---|
| 2.1 | 435 | 114 | 1,23 | 28,3 | 0,0076 |
|  |  | 715 | 1,21 | 27,8 | 0,0098 |
|  |  | 1990 | 1,19 | 27,3 | 0,009 |
| 2.2 | 400 | 111 | 1,06 | 26,5 | 0,0089 |
|  |  | 696 | 1,05 | 26,2 | 0,009 |
|  |  | 1940 | 1,04 | 26 | 0,01 |

Tendenziell wird der gleiche günstige Vergütungseffekt auf das Verhältnis E/Dichte wie in Beispiel 1 auch bei 190 °C erzielt. Psychoakustisch klingt Probe 2.1 beim Klopfversuch heller als Probe 2.2, aber auch heller als Probe 1.1.

### Beispiel 3

Eine Probe Redwoodholz wird wie in Beispiel 1.1 behandelt (3.1). Die vergleichende akustische Untersuchung mit unbehandeltem Holz (3.2) ergibt die folgenden Werte :

4

| Probe | Dichte | Resonanz-frequenz | E-Modul | E/Dichte | Verlust-faktor |
|-------|--------|-------------------|---------|----------|----------------|
| | $(kg/m^3)$ | $(Hz)$ | $\cdot 10^{10}(N/m^2)$ | $\cdot 10^6(m^2/s^2)$ | |
| 3.1 | 435 | 86 | 0,84 | 19,3 | 0,0064 |
| | | 544 | 0,85 | 19,5 | 0,013 |
| | | 1509 | 0,83 | 19,1 | 0,0086 |
| | | 2900 | 0,8 | 18,4 | 0,0096 |
| 3.2 | 400 | 74 | 0,56 | 14 | 0,0096 |
| | | 478 | 0,6 | 15 | 0,0079 |
| | | 1360 | 0,62 | 15,5 | 0,0076 |
| | | 2620 | 0,58 | 14,5 | 0,0088 |

Beispiel 4

Eine Probe Zedernholz wird wie in Beispiel 1.1 behandelt (4.1). Eine Vergleichsprobe wird der gleichen Druck- und Temperaturbehandlung unterworfen, aber nicht in Gegenwart von Phenol und Formaldehyd. Nach dieser rein thermischen Vergütung wird die Vergleichsprobe 7 Tage bei 80 °C in einer mit Phenol und Formaldehyd gesättigten Atmosphäre gelagert, um eine molekulare Adsorption dieser Komponenten zu ermöglichen. Anschließend wird diese Probe 8 h bei 120 °C in einer gesättigten Phenol-, Formaldehyd- und Essigsäureatmosphäre erhitzt (Probe 4.2). Die Proben 4.1 und 4.2 werden mit unbehandelten Nullproben (4.3) akustisch verglichen. Die Biegeschwingungsmessungen werden an Prüfstäben der Abmessungen 3 mm × 10 mm × 200 mm durchgeführt.

| Probe | Dichte | Resonanz-frequenz | E-Modul | E/Dichte | Verlust-faktor |
|-------|--------|-------------------|---------|----------|----------------|
| | $(kg/m^3)$ | $(Hz)$ | $\cdot 10^{10}(N/m^2)$ | $\cdot 10^6(m^2/s^2)$ | |
| 4.1 | 375 | 319 | 0,670 | 17,8 | 0,0056 |
| | | 875 | 0,630 | 16,8 | 0,0089 |
| | | 1745 | 0,665 | 17,7 | 0,0086 |
| | | 2970 | 0,72 | 19,2 | 0,0090 |
| 4.2 | 375 | 295 | 0,525 | 14,0 | 0,005 |
| | | 800 | 0,482 | 12,8 | 0,0065 |
| | | 1600 | 0,507 | 13,5 | 0,0080 |
| | | 2725 | 0,537 | 14,3 | 0,0080 |
| | | 4140 | 0,550 | 14,6 | 0,0370 |
| 4.3 | 380 | 315 | 0,626 | 16,47 | 0,0041 |
| | | 855 | 0,590 | 15,5 | 0,0067 |
| | | 1710 | 0,610 | 16,0 | 0,0078 |
| | | 2850 | 0,630 | 16,5 | 0,0080 |

Beispiel 5

Fichtenresonanzholz wird wie die Vergleichsprobe in Beispiel 2 bei 11 bar und 190 °C 75 min lang behandelt,
a. in einer reinen Inertgasatmosphäre (Probe 5.1)
b. in einer mit 2 Vol % Formaldehyd angereicherten Inertgasatmosphäre (Probe 5.2)
Die akustische Auswertung im Vergleich mit einer unbehandelten Probe (5.3) ergibt bei der

5

Biegeschwingungsmessung an Proben der Abmessung 4 mm × 10 mm × 200 mm folgende Werte.

| Probe | Dichte $(kg/m^3)$ | Resonanz- frequenz $(Hz)$ | E-Modul $\cdot 10^{10}(N/m^2)$ | E/Dichte $\cdot 10^6(m^2/s^2)$ | Verlust- faktor |
|---|---|---|---|---|---|
| 5.1 | 455 | 543 | 1,09 | 24,0 | 0,011 |
| | | 1480 | 1,02 | 22,4 | 0,010 |
| | | 2870 | 1,01 | 22,2 | 0,011 |
| | | 4780 | 1,01 | 22,2 | 0,041 |
| 5.2 | 450 | 547 | 1,11 | 24,6 | 0,007 |
| | | 1490 | 1,05 | 23,3 | 0,010 |
| | | 2900 | 1,02 | 22,6 | 0,010 |
| | | 4820 | 1,03 | 23,0 | 0,04 |
| 5.3 | 510 | 542 | 1,22 | 23,9 | 0,009 |
| | | 1470 | 1,14 | 22,3 | 0,010 |
| | | 2830 | 1,1 | 21,5 | 0,013 |
| | | 4715 | 1,11 | 21,7 | 0,050 |

**Patentansprüche**

1. Verfahren zur Vergütung von Holz, dadurch gekennzeichnet, daß während oder kurz nach dem Eindringen von 0,1 bis 2,5 Gew.-%, bezogen auf das Trockengewicht des Holzes, reaktiven Bausteinen duroplastischer Polymere in die Kapillaren vo Holz mit einem Wassergehalt von nicht mehr als 10 Gew.% eine Behandlung bei Temperaturen von 170 bis 200 °C und Drücken von 3 bis 15 bar erfolgt.

2. Verfahren nach Anspruch 1, dadurch gekennzeichnet, daß die reaktiven Bausteine mit dem Holz in den Reaktor eingebracht werden, während der Aufheizphase des Reaktors verdampfen und, unterstütz durch den aufgebrachten Druck, in die Kapillaren des Holzes eindringen.

3. Verfahren nach Anspruch 1, dadurch gekennzeichnet, daß Holz in einer Vakuumkammer unter Vakuum behandelt wird, der Druckausgleich mittels gasförmigem Furfurylalkohol, Phenol oder Phenolderivat oder mittels Phenols oder einem mit Phenol beladenen Trägergas erfolgt, danach erneut unter Vakuum behandelt wird, der zweite Druckausgleich mittels gasförmigem Aldehyd oder einem mit einem Aldehyd beladenen Trägergas erfolgt und danach das Holz während 0,5 bis 8 h bei Temperaturen von 170 bis 200 °C und Drücken von 3 bis 15 bar behandelt wird.

4. Verfahren nach den Ansprüchen 1 bis 3, dadurch gekennzeichnet, daß bei der Druck- und Temperaturbehandlung des Holzes Schwingungen im Bereich von 16 bis 4 000 Hertz auf das Holz einwirken.

5. Verwendung des nach den Ansprüchen 1 bis 4 vergüteten Holzes zur Herstellung von Klangkörpern.

**Claims**

1. A process for improving wood, characterised in that, during or shortly after penetration of from 0.1 to 2.5 % by weight, based on the dry weight of the wood, of reactive components of duroplastic polymers into the capillaries of wood having a water content not exceeding 10 % by weight, a treatment is carried out at temperatures of from 170 to 200 °C and at pressures of from 3 to 15 bar.

2. A process according to claim 1, characterised in that the reactive components are introduced into the reactor with the wood, vaporise as the reactor heats up and penetrate into the capillaries of the wood, assisted by the applied pressure.

3. A process according to claim 1, characterised in that wood is treated under vacuum in a vacuum chamber, pressure compensation is carried out by means of gaseous furfuryl alcohol, phenol or phenol derivative or by means of phenol or a phenol-charged carrier gas, the wood is again treated under vacuum, the second pressure compensation operation is carried out using gaseous aldehyde or an aldehyde-charged carrier gas and the wood is then treated for 0.5 to 8 h at temperatures of from 170 to 200 °C and pressures of from 3 to 15 bar.

4. A process according to claims 1 to 3, characterised in that vibrations in the range of from 16 to 4 000 Hertz act on the wood during the presure and temperature treatment.

5. Use of the wood improved according to claims 1 to 4 for the production of acoustic articles.

**Revendications**

1. Procédé destiné à améliorer le bois, caractérisé en ce que pendant ou peu de temps après la pénétration de 0,1 à 2,5 % en poids, rapportés au poids sec du bois, d'éléments constitutifs réactifs de polymères thermodurcissables dans les capillaires du bois ayant une teneur en eau non supérieure à 10 % en poids on effectue un traitement à des températures de 170 à 200 °C sous des pressions de 3 à 15 bars.

2. Procédé selon la revendication 1, caractérisé en ce que les éléments constitutifs réactifs sont introduits dans l'enceinte réactionnelle avec le bois, s'évaporent pendant la phase de chauffe de l'enceinte réactionnelle et, grâce à la pression appliquée pénètrent dans les capillaires du bois.

3. Procédé selon la revendication 1, caractérisé en ce que le bois est traité sous vide dans une chambre à vide, la compendation de pression s'effectue au moyen d'alcool furfurylique gazeux, de phénol ou d'un dérivé de phénol ou au moyen de phénol ou d'un gaz porteur chargé de phénol, en ce qu'il est ensuite de nouveau traité sous vide, la seconde compensation de pression s'effectuant au moyen d'aldéhyde gazeux ou d'un gaz porteur chargé d'aldéhyde et en ce qu'ensuite le bois est traité pendant 0,5 à 8 heures à des températures de 170 à 200 °C et sous des pressions de 3 à 15 bars.

4. Procédé selon les revendications 1 à 3, caractérisé en ce que lors du traitement de pression et de température du bois, on fait agir des vibrations dans le domaine de 16 à 4 000 Hertz sur le bois.

5. Utilisation du bois amélioré selon les revendications 1 à 4 pour la fabrication de corps acoustiques.